# EUROPEAN PATENT SPECIFICATION

(11) **EP 4 039 631 B1**
(45) Date of publication and mention of the grant of the patent: **09.04.2025**
(21) Application number: 20872338.7
(22) Date of filing: 29.09.2020
(51) Int. Cl.: F16G 11/04, B66B 7/08

(54) **TENSIONING ELEMENT ANCHOR**
SPANNELEMENTANKER
ATTACHE D'ÉLÉMENT TENDEUR

(30) Priority: 03.10.2019 ES 201931598 U
(43) Date of publication of application: 10.08.2022
(73) Proprietor: Talleres Agui, S.A., 20180 Oiartzun (Guipúzcoa) (ES)
(72) Inventor: IRAZU GONZÁLEZ, Eduardo, 20180 Oiartzun (Guipúzcoa) (ES); SENDÓN VERDINI, Ioannes, 20180 Oiartzun (Guipúzcoa) (ES)
(74) Representative: Ungria López, Javier
(86) International application number: PCT/ES2020/070583
(87) International publication number: WO 2021/064266

(56) References cited:
- EP-A1- 3 470 356
- EP-A1- 3 470 356
- WO-A1-00/40497
- WO-A1-00/40497
- ES-T3- 2 336 119
- ES-T3- 2 445 181
- US-A1- 2009 307 876
- US-B2- 6 662 408

## Description

### OBJECT OF THE INVENTION

The present invention relates to a tensioning element anchor of the types used in lifting systems, the configuration and design of which allows it to be manufactured and assembled in a quick, simple, and cost-effective manner.

### TECHNICAL PROBLEM TO BE RESOLVED AND BACKGROUND OF THE INVENTION

Current lifting systems, such as elevators, use tensioning elements such as flat belts, cables, and the like the function of which is to support and move the car in a desired manner in combination with the corresponding pulleys and sometimes counterweights.

These tensioning elements require an anchor at their extremities offering optimal securing to the established anchoring points.

Anchors comprising a casing and a wedge are normally used to perform this optimal securing. In that sense, the tensioning element is located surrounding the wedge which is inserted into the casing and between the surface of the wedge and the casing by means of pressure, with the tensioning element being retained between the two elements.

Casings are manufactured by means of casting which presents mainly cost-based problems in terms of the manufacturing process due, on one hand, to the high costs of manufacturing by means of casting, and on the other hand, to the precision of this manufacturing method, the tolerances of which, mainly in terms of inclination and parallelism, do not allow obtaining an optimal fitting between the surface of the casing and the surface of the wedge. This entails the need to introduce inserts and/or roughness on the surfaces of the casing and the wedge to ensure the securing.

To prevent these problems, there is another method for manufacturing casings consisting of forming a metal sheet. In this case, two U-shaped half-casings which are subsequently attached by means of welding to obtain the final casing are made.

This method still presents the problem relating to manufacturing costs, as well as the dependence thereof on weld quality so that the casing does not open due to the stresses to which it will be subjected.

The present invention provides a solution to these problems that were not resolved in the present state of the art by presenting an anchor formed by means of metal sheets mechanically assembled in such a way that a quick, simple, and cost-effective manufacturing and assembly process is achieved.

### DESCRIPTION OF THE INVENTION

To achieve the objectives and prevent the aforementioned drawbacks, the present invention describes a tensioning element anchor in which the tensioning element is located surrounding a wedge that will be introduced into a casing in which a rod for the securing of the anchor is coupled.

The casing is the main component of the anchor and is formed by the elements described below.

A supporting base which is configured by means of a sheet formed with a U-shaped section, i.e., a base and two flanges. A part of the length of the flanges has a trapezoid configuration, increasing in height from one of the extremities to an intermediate area, with the inclined free edge being bent towards the inside of the U forming an elongated stop.

A rectangular frontal plate with bent smaller extremities to limit a planar area having a length similar to the length of the elongated stop and a width which is smaller than the distance between the flanges of the supporting base and greater than the distance separating both elongated stops. The frontal plate is supported on the elongated stops on the inside of the supporting base, with the bent edges being arranged on the outside with respect to the supporting base, performing the function of a stop which prevents the frontal plate from sliding over the elongated stops.

A rectangular rearward plate in which one of the smaller sides features a pair of perpendicular projections which are introduced into holes featured on the supporting base so that the rearward plate is secured to the supporting base.

A bush with T-shaped cross-section which features a threaded through-hole therein. The bush is coupled in side openings and in a lower opening of the supporting base. Moreover, the through-hole of the bush is intended for receiving the securing rod, with the rod being threaded into the hole.

Therefore, once the securing rod is fastened at one extremity, the other extremity is introduced into the bush and secured by being threaded into the through-hole of the bush. Once all the elements of the casing have been coupled, upon introducing the wedge surrounded by the tensioning element and upon said wedge resting on the frontal plate and the rearward plate, a solid fixing is created once the tensioning element is subjected to load.

As an alternative mode which focuses on greater safety in the coupling of the components of the casing, the flanges of the supporting base can incorporate bores at their extremities for housing respective pins.

Furthermore, an optimal operating mode of the anchor is when the frontal plate and the rearward plate form an angle comprised between 12° and 22°, and preferably 15°.

Another optimal operating mode of the anchor is when the wedge has a length comprised between 50 and 100 mm, and preferably 80 mm.

### BRIEF DESCRIPTION OF THE FIGURES

To complete the description of the invention, and for the purpose of helping to make the features thereof more readily understandable, according to a preferred exemplary embodiment thereof, a set of drawings is included wherein, by way of illustration and not limitation, the following figures have been represented:
- Figure 1 depicts a perspective view of the anchor of the invention with a casing mechanically coupled to a securing rod intended for being mechanically coupled to a fixed point at the upper extremity.
- Figure 2 depicts a cross-section view of the assembly depicted in Figure 1, showing the constituent elements with greater clarity.
- Figure 3 depicts a perspective view of a second embodiment with the elements of the casing in an exploded view.

A list of the references used in the figures is provided below:
1. Casing
2. Supporting base.
3. Front plate.
4. Rearward plate.
5. Bush.
6. Side openings for coupling the bush.
7. Lower opening for coupling the bush.
8. Holes for the rearward plate.
9. Wedge.
10. Elongated stop.
11. Pin.
12. Bores for the pin.
13. Projections of the rearward plate.
14. Rod.
15. Tensioning element.

### DESCRIPTION OF A PREFERRED EMBODIMENT OF THE INVENTION

As indicated, the present invention relates to a tensioning element (15) anchor. In a preferred embodiment, the tensioning element anchor is configured by means of a casing (1) into which a wedge (9) is inserted with the tensioning element (15) already located surrounding same, in such a way that the assembly of the two parts creates the desired pressure fixing.

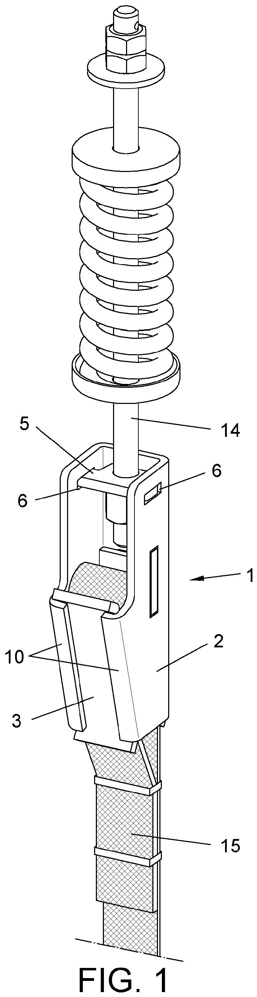

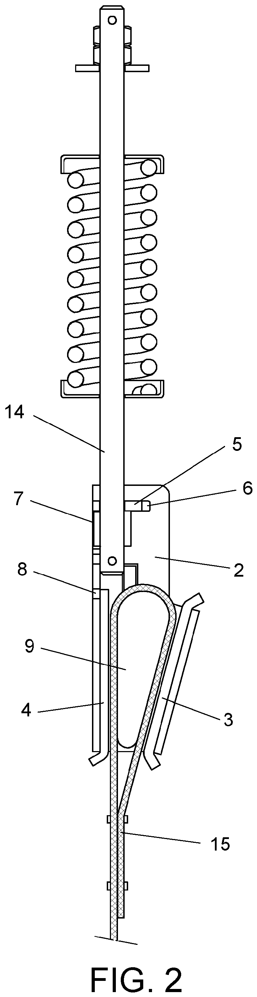

In a first embodiment as shown in Figures 1 and 2, the casing (1) is formed by a supporting base (2), a frontal plate (3), a rearward plate (4), and a bush (5).

The supporting base (2) is symmetrical and configured by means of a sheet formed with a U-shaped section where the two flanges are not rectangular, rather they increase gradually from one of the extremities so as to increase the height of the flanges and form a step in an intermediate area of the length. Furthermore, the inclined free edge is bent towards the inside of the U forming an elongated stop (10).

The frontal plate (3) is configured by means of a rectangle the smaller extremities of which are bent to limit a planar area having the same length as the elongated stop (10) and a width greater than the distance separating both elongated stops (10) but smaller than the distance between the flanges of the supporting base (2), in such a way that it can be located inside the supporting base (2) but retained by the elongated stops (10).

The rearward plate (4) is configured by means of a rectangular plate featuring at one of the extremities a pair of projections (13) perpendicular to the surface of the rearward plate (4), intended for being introduced into holes (8) featured on the supporting base (2) in such a way that the rearward plate (4) is secured to the supporting base (2). Likewise, the other extremity of the rearward plate (4) is bent in such a way that, when the rearward plate (4) is secured in the supporting base (2), this bent extremity is located on the outside with respect to the supporting base (2).

The bush (5) is a T-shaped bush installed in the supporting base (2) in side openings (6) and a lower opening (7) of said supporting base (2). Furthermore, the bush (5) features a threaded inner through-hole where a rod (14) for the securing of the anchor is installed in such a way that the anchor is secured to its anchoring point by the free extremity of the rod (14) and the rod (14) is attached at the other extremity by means of threading into the through-hole of the bush (5), preventing the rod (14) from being able to come out of the bush (5). Furthermore, the rod (14) usually incorporates a spring, as depicted in the figures, performing the function of providing a greater load to the anchor.

The triangular shape created by the flanges of the supporting base (2) in the raised area is configured so that, once the frontal plate (3) has been fitted in the elongated stops (10) and the rearward plate (4) in the holes (8), the wedge (9) fits inside the supporting base (2) incorporating the tensioning element (15), so the assembly is completely fitted.

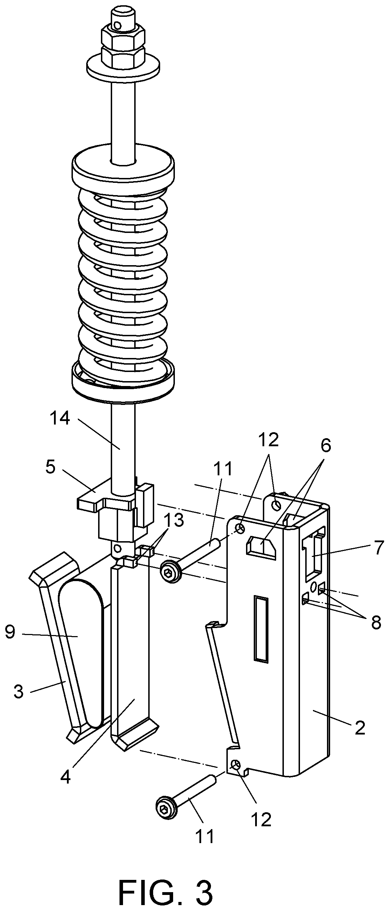

In a second embodiment as shown in Figure 3, the casing (1) additionally incorporates pins (11) which are located in respective bores (12) located at the extremities of the flanges of the supporting base (2) for the purpose of providing an additional degree of safety which ensures the operation of the casing (1).

Lastly, it must be taken into account that the present invention must not be limited by the embodiment described herein. Other configurations may be carried out by those skilled in the art based on the present description. Accordingly, the scope of the invention is defined by the following claims.

## Claims

1. A tensioning element (15) anchor comprising a wedge (9) intended for being introduced into a casing (1) and surrounded by the tensioning element (15) and a rod (14), for the securing of the anchor, coupled to the casing (1), the casing (1) being **characterised in that** it comprises:
- a supporting base (2) configured by means of a sheet formed with a U-shaped section where a part of the length of the flanges has a trapezoid configuration increasing in height from one of the extremities to an intermediate area, with the inclined free edge being bent towards the inside of the U forming an elongated stop (10),
- a rectangular frontal plate (3) with bent smaller extremities to limit a planar area having a length similar to the length of the elongated stop (10) and a width which is smaller than the distance between the flanges of the supporting base (2) and greater than the distance separating both elongated stops (10),
- a rectangular rearward plate (4) in which one of the smaller sides features a pair of perpendicular projections (13), and
- a bush (5) with a T-shaped cross-section which features a threaded through-hole,
wherein,
- the frontal plate (3) is located inside the supporting base (2) supported on the elongated stops (10) and with the bent smaller extremities arranged on the outside with respect to the supporting base (2) when the wedge (9) is introduced,
- the projections (13) of the rearward plate (4) are introduced into holes (8) featured on the supporting base (2) in such a way that the rearward plate (4) is secured to the supporting base (2),
- the bush (5) is coupled in side openings (6) and in a lower opening (7) of the supporting base (2), and
- the threaded through-hole of the bush (5) is intended for receiving the securing rod (14) preventing the rod (14) from becoming separated from the bush (5),
in such a way that the coupling of the wedge (9) on the frontal plate (3) and the rearward plate (4) of the casing (1), with the tensioning element (15) surrounding the wedge (9), creates a solid fixing as the securing rod (14) is held by its free extremity and the tensioning element (15) is subjected to load.

2. The tensioning element (15) anchor according to claim 1, **characterised in that** the flanges of the supporting base (2) feature bores (12) at the extremities for housing respective pins (11), in such a way that the safety of the casing (1) is reinforced.

3. The tensioning element (15) anchor according to any of claims 1 or 2, **characterised in that** the angle between the frontal plate (3) and the rearward plate (4) is comprised between 12° and 22°.

4. The tensioning element (15) anchor according to claim 3, **characterised in that** the angle between the frontal plate (3) and the rearward plate (4) is 15°.

5. The tensioning element (15) anchor according to any of claims 1 or 2, **characterised in that** the length of the wedge (9) is comprised between 50 and 100 mm.

6. The tensioning element (15) anchor according to claim 5, **characterised in that** the length of the wedge (9) is 80 mm.

## Patentansprüche

1. Verankerung für ein Spannelement (15), umfassend einen Keil (9), der zum Einführen in ein Gehäuse (1) bestimmt ist und von dem Spannelement (15) umschlossen ist, sowie eine Stange (14) zum Befestigen der Verankerung, die mit dem Gehäuse (1) gekoppelt ist, wobei das Gehäuse (1) **dadurch gekennzeichnet ist, dass** es umfasst:
- einen Tragesockel (2), der durch ein Blech gebildet wird, das mit einem U-förmigen Profil versehen ist, wobei ein Teil der Länge der Flansche einen trapezförmigen Aufbau hat, dessen Höhe von einem der äußeren Enden zu einem Mittelbereich zunimmt, wobei die geneigte freie Kante in Richtung der Innenseite des "U" gebogen ist und einen länglichen Anschlag (10) bildet,
- eine rechteckige vordere Platte (3) mit gebogenen kleineren äußeren Enden, die einen planen Bereich begrenzen, der eine Länge, die der Länge des länglichen Anschlags (10) gleicht, und eine Breite hat, die kleiner ist als der Abstand zwischen den Flanschen des Tragesockels (2) und größer als der Abstand der beide längliche Anschläge (10) trennt,
- eine rechteckige hintere Platte (4), bei der eine der kleineren Seiten ein Paar senkrechter Vorsprünge (13) aufweist, und
- eine Buchse (5) mit einem T-förmigen Querschnitt, die ein Gewinde-Durchgangsloch aufweist,
wobei
- die vordere Platte (3) sich im Inneren des Tragesockels (2) befindet und auf den länglichen Anschlägen (10) aufliegt und die gebogenen kleineren äußeren Enden an der Außenseite in Bezug auf den Tragesockel (2) angeordnet sind, wenn der Keil (9) eingeführt ist,
- die Vorsprünge (13) der hinteren Platte (4) in Löcher (8), die an dem Tragesockel (2) ausgebildet sind, so eingeführt sind, dass die hintere Platte (4) an dem Tragesockel (2) befestigt ist,
- die Buchse (5) in seitliche Öffnungen (6) sowie eine untere Öffnung (7) des Tragesockels (2) eingesetzt ist, und
- das Gewinde-Durchgangsloch der Buchse (5) zum Aufnehmen der Sicherungsstange (14) bestimmt ist, um zu verhindern, dass die Stange (14) von der Buchse (5) getrennt wird,
so dass durch das Koppeln des Keils (9) an der vorderen Platte (3) und der hinteren Platte (4) des Gehäuses (1) mit dem Spannelement (15), das den Keil (9) umschließt, eine feste Fixierung geschaffen wird, wenn die Sicherungsstange (14) über ihr freies Äußeres Ende gehalten wird und das Spannelement (15) Last ausgesetzt wird.

2. Verankerung für ein Spannelement (15) nach Anspruch 1, **dadurch gekennzeichnet, dass** die Flansche des Tragesockels (2) Bohrungen (12) an den äußeren Enden aufweisen, in denen jeweilige Stifte (11) so aufgenommen werden, dass die Sicherheit des Gehäuses (1) verstärkt wird.

3. Verankerung für ein Spannelement (15) nach einem der Ansprüche 1 oder 2, **dadurch gekennzeichnet, dass** der Winkel zwischen der vorderen Platte (3) und der hinteren Platte (4) zwischen 12° und 22° liegt.

4. Verankerung für ein Spannelement (15) nach Anspruch 3, **dadurch gekennzeichnet, dass** der Winkel zwischen der vorderen Platte (3) und der hinteren Platte (4) 15° beträgt.

5. Verankerung für ein Spannelement (15) nach einem der Ansprüche 1 oder 2, **dadurch gekennzeichnet, dass** die Länge des Keils (9) zwischen 50 und 100 mm liegt.

6. Verankerung für ein Spannelement (15) nach Anspruch 5, **dadurch gekennzeichnet, dass** die Länge des Keils (9) 80 mm beträgt.

## Revendications

1. Ancrage d'élément de tension (15) comprenant une cale (9) prévue pour être introduite dans un boîtier (1) et entourée par l'élément de tension (15) et une tige (14), pour la fixation de l'ancrage, couplé au boîtier (1), le boîtier (1) étant **caractérisé en ce qu'**il comprend :
une base de support (2) configurée au moyen d'une feuille formée avec une section en forme de U où une partie de la longueur des brides a une configuration trapézoïdale augmentant en hauteur à partir de l'une des extrémités jusqu'à une zone intermédiaire, avec le bord libre incliné qui est plié vers l'intérieur du U formant une butée allongée (10),
une plaque frontale rectangulaire (3) avec de plus petites extrémités pliées pour limiter une zone plane ayant une longueur similaire à la longueur de la butée allongée (10) et une largeur qui est inférieure à la distance entre les brides de la base de support (2) et supérieure à la distance séparant les deux butées allongées (10),
une plaque arrière rectangulaire (4) dans laquelle l'un des plus petits côtés présente une paire de saillies perpendiculaires (13), et
une douille (5) avec une section transversale en forme de T qui présente un trou débouchant fileté,
dans lequel :
la plaque frontale (3) est positionnée à l'intérieur de la base de support (2) supportée sur les butées allongées (10) et avec les plus petites extrémités pliées agencées à l'extérieur par rapport à la base de support (2) lorsque la cale (9) est introduite,
les saillies (13) de la plaque arrière (4) sont introduites dans des trous (8) présentés sur la base de support (2) de sorte que la plaque arrière (4) est fixée sur la base de support (2),
la douille (5) est couplée dans les ouvertures latérales (6) et dans une ouverture inférieure (7) de la base de support (2), et
le trou débouchant fileté de la douille (5) est prévu pour recevoir la tige de fixation (14) empêchant la tige (14) de se séparer de la douille (5),
de sorte que le couplage de la cale (9) sur la plaque frontale (3) et la plaque arrière (4) du boîtier (1), avec l'élément de tension (15) entourant la cale (9), crée une fixation solide lorsque la tige de fixation (14) est maintenue par son extrémité libre et que l'élément de tension (15) est soumis à la charge.

2. Ancrage d'élément de tension (15) selon la revendication 1, **caractérisé en ce que** les brides de la base de support (2) présentent des alésages (12) au niveau des extrémités pour loger des broches (11) respectives, de sorte que la sécurité du boîtier (1) est renforcée.

3. Ancrage d'élément de tension (15) selon l'une quelconque des revendications 1 ou 2, **caractérisé en ce que** l'angle entre la plaque frontale (3) et la plaque arrière (4) est compris entre 12° et 22°.

4. Ancrage d'élément de tension (15) selon la revendication 3, **caractérisé en ce que** l'angle entre la plaque frontale (3) et la plaque arrière (4) est de 15°.

5. Ancrage d'élément de tension (15) selon l'une quelconque des revendications 1 ou 2, **caractérisé en ce que** la longueur de la cale (9) est comprise entre 50 et 100 mm.

6. Ancrage d'élément de tension (15) selon la revendication 5, **caractérisé en ce que** la longueur de la cale (9) est de 80 mm.
